# EUROPEAN PATENT SPECIFICATION

(11) **EP 4 474 598 B1**
(45) Date of publication and mention of the grant of the patent: **26.08.2026**
(21) Application number: 23177950.5
(22) Date of filing: 07.06.2023
(51) Int. Cl.: F16F 15/00, E04H 9/02, F16F 15/02, F16F 15/027, G05D 19/02

(54) **COMPUTER IMPLEMENTED METHOD FOR ACTIVE DAMPENING VIBRATIONS IN A STRUCTURE, SYSTEM, AND COMPUTER PROGRAM**
COMPUTERIMPLEMENTIERTES VERFAHREN ZUR AKTIVEN DÄMPFUNG VON SCHWINGUNGEN IN EINER STRUKTUR, SYSTEM UND COMPUTERPROGRAMM
PROCÉDÉ MIS EN OEUVRE PAR ORDINATEUR POUR AMORTIR DES VIBRATIONS ACTIVES DANS UNE STRUCTURE, SYSTÈME ET PROGRAMME INFORMATIQUE

(43) Date of publication of application: 11.12.2024
(73) Proprietor: MECAL Intellectual Property and Standards B.V., 5615 AT Eindhoven (NL)
(72) Inventor: BAKKER, Bernhard Michael, 7524 PK Enschede (NL); JUNGMAN, Hindericus Arend, 7524 PK Enschede (NL)
(74) Representative: Ziebig Hengelhaupt Intellectual Property Attorneys Patentanwaltskanzlei PartGmbB

(56) References cited:
- EP-A1- 3 584 664
- US-A- 5 046 290
- US-A- 5 592 791

## Description

Computer implemented method for active dampening vibrations in a structure, system, and computer program.

### FIELD OF THE INVENTION

The invention relates to a computer implemented method of active dampening of vibrations in a structure, a corresponding method and computer program, in detail according to the features of the independent claims.

### BACKGROUND OF THE INVENTION

Buildings in earthquake regions such as Japan need to be designed mechanically flexible to absorb oscillations and waves of earthquakes to avoid structural damages. Therefore, a stiffness of such buildings is intentionally kept low. This low stiffness is achieved in the buildings basic construction principles and is a fixed building property.

At the same time, accuracy requirements for production of e.g. semiconductor chips are getting significantly higher. For instance, requirements for semiconductor nanostructures are changing from 20 nm and more down to ranges of 5 nm and smaller. This requires a very high stiffness of such building, and an extremely high effectiveness of any anti-vibration measures as even low vibrations may cause a lower yield and higher cost.

Consequently, given these higher accuracy requirements, regions with a higher risk of earthquakes can no longer be considered as production sites for vibration sensitive machines like machines for semiconductor chips e.g. using next generation machines like lithography laser platforms as they do no longer fulfill the higher stiffness requirements.

US5592791 A discloses an advanced active vibration control system which attenuates vibrations from environmental disturbances in buildings using sensors, actuators, and digital signal processing with adaptive filtering. However, the document provides as actuators only two large actuators 28A, 28B in the most upper floor of the building.

EP3584664 A1 provides a compact, cost-effective vibration control apparatus and method that precludes the need for onboard frequency analysis equipment. By utilizing pre-analyzed vibration data to program the control unit, it enables real-time response to vibrations with minimized noise, error, and resonance risk, delivering a targeted suppression signal to actuators for efficient vibration damping.

### DESCRIPTION OF THE INVENTION

It is therefore desirable to re-enable these sites and locations as potential production sites providing the required level of stiffness while maintaining an effective protection of the buildings against earthquakes.

The present invention is not limited on machine sites in earthquake areas but also may be useful if applied to structures such as buildings with floors that are less stiff.

The object of the present invention is to provide a computer implemented method of active dampening of vibrations in a structure, a corresponding method and computer program which are improved compared to the prior art. In particular, the stiffness of a building shall be actively enhanced.

The object is solved by a computer implemented method of active dampening of vibrations in a structure, a corresponding method and computer program according to the independent claims. The dependent claims describe particularly useful further embodiments of the invention.

A computer implemented method of active dampening of vibrations in a structure having a floor, according to the present invention, comprises the following steps:
a) distributing a plurality of devices over several discrete positions on the floor, the devices being capable of capturing data related to the vibrations of the floor;
b) inducing initial vibrations by repeatedly applying a force to the floor;
c) capturing data related to the mass, stiffness and damping distribution of the floor from the captured data related to the initial vibrations of the floor with each device;
d) creating a virtual mass, stiffness or damping model of the floor from the captured data of the devices;
e) detecting vibrations in the floor (other than the initial vibrations) with the devices over the respective several discrete positions;
f) inducing corresponding counter-vibrations in respect to the detected vibrations over the several discrete positions of the floor in dependence of the virtual mass, stiffness, or damping model of the floor by repeatedly applying a respective counterforce to the floor.

According to the invention, a distributed sensor network (plurality of devices) around the production site of a machine (floor) may detect for example an approaching earthquake wave or vibration from in- or outside the structure before it arrives at the floor on which the vibration sensitive machine stands. The technical advantage is a more effective vibration isolation of the machine and an optimized setpoint for the machine leading to higher machine efficiency and output quality. The inventive solution will thus provide a "virtual stiffness" to structures like buildings, especially in earthquake areas. Thus, a high level of virtual stiffness in a floor of a structure e.g. to support semiconductor chip production may be achieved.

According to step b) force is applied to the floor in a frequency range. This can be done with the devices, as will be explained later. This force application results in floor vibrations in a special frequency range that are measured with the devices. In that way transfer functions (vibration resulting from force as function of frequency) are measured from each device. In step d) the transfer functions are combined via interpolation into a modal model of the floor. The modal model contains stiffness, mass or damping distribution of the floor due to the measurement of the answer of the initial induction of vibrations into the floor. Interpolation hereby means that the measurement exactly describes the transfer of force to vibration from one discrete vibration generator of the device (actuator) to each discrete vibrations transducer (sensor) of the device. The interpolation shows the transfer of force to vibration from each location of the actuators to each location on the floor (between sensor positions).

The steps a) to d) may be contemplated as initialization steps to measure the mass, stiffness, and damping properties of the floor and to calibrate the system. They normally need to be run once, when calibrating the system. That means, that the vibrations detected in step e) of the inventive method are different to the artificially induced initial vibrations, especially in step b). Thus, the vibrations detected in step e) are vibrations caused by sources on the floor of the structure, like machines (e.g. chip production machines) standing on the floor, by sources from other parts of the structure (such as air conditioners or pumps in the building) or from outside of the structure (such as traffic or earthquakes). However, the steps a) to d) may be run often than one time, e.g. periodically in order to adapt for changes in the vibrations of the floor and can be part of a self- or machine-learning.

Thereby, at least the steps b), c), e) - and particularly step f) - are carried out by one and the same devices on the same positions, the devices therefore comprising a vibration transducer for detecting vibrations of the floor and at least one vibration generator for compensating for the detected vibrations by introducing corresponding counter-vibrations into the floor. In other words, the vibration detection and the induction of the corresponding counter-vibrations takes place via one and the same device, each device advantageously including a vibration transducer (sensor) and a vibration generator (actuator) and are arranged nearly over the same place.

According to an example, the generation or induction of counter-vibrations comprises using vibrations of other production machines or appliances such as air-conditioning devices located in or near the same floor or building structure. In other words, machines generate vibrations during their operation which propagate across a building structure. For example, a setpoint of these machines are adjusted in a way that their generated vibrations act as counter-vibrations in the context of the claimed method. The data model can further consider the mass of a machine and therefore its vibration generation and damping behavior.

According to an example, other vibration sources and media such as noise, which can be seen as a vibration of an air volume (air conditioning systems), or vibrations of water media are considered in the data model. The vibration generators can, according to an example, also be configured to generate counterforces over gas and fluid media such as air or water. In other words, both, sources of vibrations as well as counterforces and counter vibrations can be related to not just fixed structures but also to said other media and are considered in the generation of the mass, stiffness or damping data model.

Thus, in a first step, before distributing the plurality of devices over several discrete positions on the floor, a site survey can be done for an approximate calculation of the stiffness properties of the install site (floor of the structure) and the vibrations that are present before installation. Based on that input the type and location of the devices may be optimized and installed accordingly. After install, the device unit may be tuned for optimal vibration reduction and controller stability and the achieved vibration reduction will be qualified. Such, the devices will be positioned on locations where they have most effective impact on the floor dynamics and where they can obtain the best information of floor dynamics.

After the distribution of the devices on the floor, the controller unit will use the vibration generator and vibration transducer, the device grid to obtain a model of the structural dynamics of the factory. This model, also called virtual mass, stiffness or damping model is based on the response of the floor measured with the devices due to excitation by the device itself. Thereby, vibration generators and vibration transducers are used to map the dynamic properties of the factory floor. The tuning or optimization of the control unit will start from a basic, not optimal starting point.

Based on the measured dynamic model of the factory floor, the self-learning software will adapt controller parameters to optimize the vibrations. The control unit retrieves information about dynamics of the factory (i.e. the response of sensors to the excitation by devices). If something changes in the factory, the dynamics model will be adjusted, and the self-learning software will adapt controller parameters (steps a) to d) of the inventive method).

Stiffness in the sense of the present invention is the extent to which an object resists deformation in response to an applied force. Stiffness may be considered as resistance of an object to static deformation (at 0 Hz) or dynamic deformation (means deformation under movement, higher than 0.01 Hz). The opposite of stiffness is compliance, flexibility, or pliability: the more flexible an object is, the less stiff it is.

With the inventive grid of devices, the movement of the floor may be measured due to the induced vibrations therein. With the devices again a counterforce to reduce this floor movement may be induced into the floor, equalizing the detected vibrations. The vibrations extinguish each other. This has the same effect as increasing the structural stiffness of an object (or building), except that it cannot be done at 0 Hz.

Such an artificial stiffness has limitations: At 0 Hz it is, by definition, impossible. However, creating stiffness over a wide frequency range demands very large motors and amplifiers. The inventive method can effectively create artificial stiffness in a limited frequency band, for instance when due to building eigenfrequencies the stiffness is reduced in a frequency range. The devices may be controlled by the control unit in a feedback control loop. This loop works as follows: The vibration transducers (sensors) provide the sensed vibration data. The control unit calculates optimal counter forces. The vibration generators (actuators) apply respective counterforces to the floor. Again, in a further loop the sensors measure the effect of the counterforces in the floor and if the effect is not achieved in this loop, another loop is carried out in order to control an adjusted counterforce.

The control unit may be connected or connectable to a vibration sensitive machine, like a machine producing semiconductor chips, like a stereolithography machine. Such a machine may include many different modes, for instance a load/unload, in which mode the machine exerts forces to the floor, but vibrations are not critical. In a scanning/processing mode the machine needs to be very accurate but does not exert high forces to the floor. Thereby, the machine controller of the machine sends in a feed forward data to the control unit about machine setpoints from the machine controller (e.g. read only) and uses that input to optimize the device setpoints before its sensors pick up disturbances.

Machine setpoints may be systematically adapted in a way that machine caused vibrations can act as counter-vibration to damp vibrations of the floor or structure. A two-way communication between the control unit of the system and the machine (machine controller) could mean that the control unit provides input to the machine controller with vibration data. The machine controller can use this to optimize its own controller settings to suppress vibrations, or even to create counter forces with its controller.

When the talk is about that something is connected or connectable to something, this means in the first case that the connection is already established and in the second case that the connection may be interruptible. In either case, the connection may be a wired connection e.g. by cables or a wireless connection, e.g. by a radio or mobile communication.

Advantageously, the plurality of devices may be placed near known vibration sources such as machines, pumps or air conditioning units being in direct or indirect contact with the floor. Thus, the vibration transducers and vibration generators may be installed on special locations, such as near a vibration source to prevent vibrations originating there from reaching the floor itself.

Further, in a step d1) between steps d) and e) of claim 1, at least one portion of the data of the created model is optimized, especially to reduce the counterforce introduced over the several discrete positions to a predetermined amount or a minimum. The virtual mass, stiffness, and damping model of the floor, also called the modal model of the floor, describes the effect of each actuator on floor vibrations at any location on the floor. The control unit can change the force output of each individual actuator to obtain a certain (mostly minimum) value at any location (over the discrete points) of the floor. There are several known methods to optimize a controller for a problem with a known disturbance location and frequency and fixed actuator and sensor positions. One of them is the H-infinity-method, see e.g., https://en.wikipedia.org/wiki/H-infinity_methods_in_control_theory or Skogestad, Sigurd; Postlethwaite, lan (2005), Multivariable Feedback Control: Analysis and Design (2nd ed.), Wiley, ISBN 978-0-470-01167-6.

With the present method and especially with the devices, in particular the vibration transducers, the amplitude, the frequency, the wavelength, the temporal course, or the spectrum of said quantities of the detected vibrations may be captured. The same is true for the vibration generators: They may apply a counterforce in form of vibrations, the vibrations may be characterized by their amplitude, frequency, wavelength, temporal course or spectrum of the said quantities.

Thereby, the induced corresponding counter-vibrations may be chosen such that a predetermined compliance of the structure is set to a predetermined frequency or frequency range, wherein the frequency is higher than 0.01 Hz and especially lower than 10 Hz.

According to an embodiment of the present invention, particularly with the method or the device, an early warning system of the vibration sensitive machine can be achieved in order to run an emergency shutdown in the case of an earthquake was sensed by the invention. Accordingly, the inventive method may further comprise the following steps, whereby the steps may be followed by step e) of the method according to claim 1:
e1) comparing the detected vibrations in the floor with at least a predetermined working vibration and a predetermined out-of-service vibration;
e2) in dependence on the comparison, compensating the detected vibrations by inducing corresponding counter-vibration in respect to the detected vibrations over the several discrete positions of the floor in dependence of the virtual mass, stiffness and damping model of the floor in the case that the detected vibration corresponds to the at least one predetermined working vibration (corresponds step
e) of the method according to claim 1) or in the case that the detected vibrations corresponds to the at least one predetermined out-of-service vibration, emitting a signal for immediately putting the machine out of service and, in the case of compensating the detected vibration by a corresponding counter-vibration, terminating the compensation (which corresponds to step f) of the method according to claim 1), and thus omitting step f) of the method according to claim 1.

In that method, the amplitude, the frequency, the wavelength, the temporal course or the spectrum of said quantities of the detected vibrations is compared with the amplitude, the frequency, the wavelength, the temporal course or the spectrum of said quantities of the predetermined working vibrations or the predetermined out-of-service vibrations.

Thereby, the at least one predetermined working vibration is between 10 Hz and 100 MHz inclusive, and the predetermined out-of-service vibration is below 10 Hz, in particular, between 5 Hz and 0.01 Hz.

According to this embodiment, there are two modes for the structure, the floor or the machine, namely a stiffness mode which is characterized by the one predetermined working vibration (in which a virtual stiffness of the structure is enlarged by equalizing detected vibrations with counterforces) and an earthquake mode which is characterized by the predetermined out-of-service vibration in which the machine is shutdown such that production is paused and the virtual stiffness of structure is reduced. An Example: A building is in stiffness mode to suppress vibrations for production purposes. Amplitudes of these vibrations are in the range of micro-meters, and concern mostly the frequency range e.g. of 5Hz to 100Hz. In case of a detected approaching external disturbance (earthquake, shock waves, accidents...), the inventive anti-vibration system is switched off, the earthquake mode is turned on and the flexibility of the structure (building architecture) absorbs the waves.

The movement of the ground or soil during an earthquake is much larger, in the range of 100-250 mm in a low frequency range (e.g., 0-5 Hz). Once the disturbance disappeared, the earthquake mode is turned off and stiffness mode is turned back on. The earthquake mode can be offered as a special protection mode and must solve large movement disturbances at low frequencies (1-5 Hz) with large wavelength compensation. Thus, the counter measurement against earthquakes induced vibrations is the structure itself, namely the engineering of it so to be resistant to earthquakes.

Advantageously, the time of flight of a vibration may be measured by the plurality of devices in order to estimate a not known source of vibrations. Such, the sensors of the devices can locate specific disturbance (vibration) sources. By example in a grid of 10 sensors near a machine causing the disturbance, all sensors would measure e.g. a 50 Hz vibration.

Thereby, the time of flight may be captured by determining the location of each of the devices on the floor and calculating the phase shift of each vibration detected with the devices. Using the location and phase shift information of all sensors combined, by use of the time of flight e.g. some sort of triangulation method, the location of the disturbance source may be estimated or even located.

The present invention also concerns a system for actively dampening vibrations in a structure having a floor, comprising a plurality of devices, each device including a vibration transducer for detecting vibrations of the floor and a vibration generator for compensating for the detected vibrations by repeatedly introducing a corresponding counterforce into the floor, and at least a control unit which is connected or connectable to the plurality of devices and being arranged to carry out a method according to the invention.

The plurality of devices may be interconnected with each other by the control unit, thus forming a grid of sensors and actuators with each other.

Thereby, the at least one vibration transducer and the at least one vibration generator of the at least one device may be installed in a common housing. So, by distributing the devices to discrete positions over the floor, a grid of sensors and actuators may be installed within minutes.

The at least one vibration transducer and the at least one vibration generator of the at least one device may be arranged on a base plate of the floor for placing a machine onto it or on a machine platform standing on the base plate or arranged between the base plate and the machine platform. Thus, the inventive devices may be integrated not only on the floor but also on the base plate. Further, the at least one device, especially the vibration transducer and the vibration generator of the at least one device may be arranged in the base plate or a machine platform arranged between the base plate and the floor or the supporting structure of that base plate. Such, the inventive devices may be integrated not only inside the floor but also inside the base plate. This is a further convenient possibility to capture and equalize vibrations. Furthermore, the at least one device, especially the vibration transducer and the vibration generator of the at least one device may be arranged inside or underground the floor.

In order to improve vibration detection, a plurality of devices may be provided and preferably at least one of the vibration transducers may be arranged outside the structure and may be arranged to detect the vibrations in the soil around the structure. Preferably, a plurality of vibration transducers may be arranged outside and connected to the control unit, thus being part of the sensor grid or network. Thus, if the outside sensor grid fails to switch modes before the e.g. earthquake shock wave arrives, the device sensors will pick up and the control unit and will trigger the earthquake mode.

Thereby, the control unit may comprise a memory to log historic vibrations captured by the plurality of devices. The system will then also log vibrations over time (e.g. days, weeks, months, years). This info shows when new vibration sources are added, and based on this information, the device (sensor or actuator) grid can be expanded or adapted in its location accordingly.

The present invention may concern a combination of an inventive system for actively dampening vibrations in a structure having a floor and a machine, in particular a vibration sensitive or vibration-prone machine, such as a stereolithography machine.

The present invention also concerns a computer program comprising instructions to cause the system of any of the claims 8 to 14 to execute the steps of the method of any of the claims 1 to 7. For example, the computer program may be executed in a processor of the control unit and/or any of the vibration transducers or generators. The computer-readable medium may be a memory of this control unit and/or the vibration transducers or generators.

In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. The computer-readable medium may be a non-transitory or transitory medium.

### BRIEF DESCRIPTION OF THE DRAWINGS

The advantages of the invention will now be illustrated in more detail with reference to a preferred embodiment and the figure.
Fig. 1 shows a schematic representation of a system that may carry out the inventive method in accordance with one embodiment;
Fig. 2 shows a schematic representation of a device according to an embodiment.
Fig. 3 shows a schematic flow chart of the inventive method.
Fig. 4 shows a simplified building and system for dampening vibrations on a floor in combination with an existing earthquake protection system.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

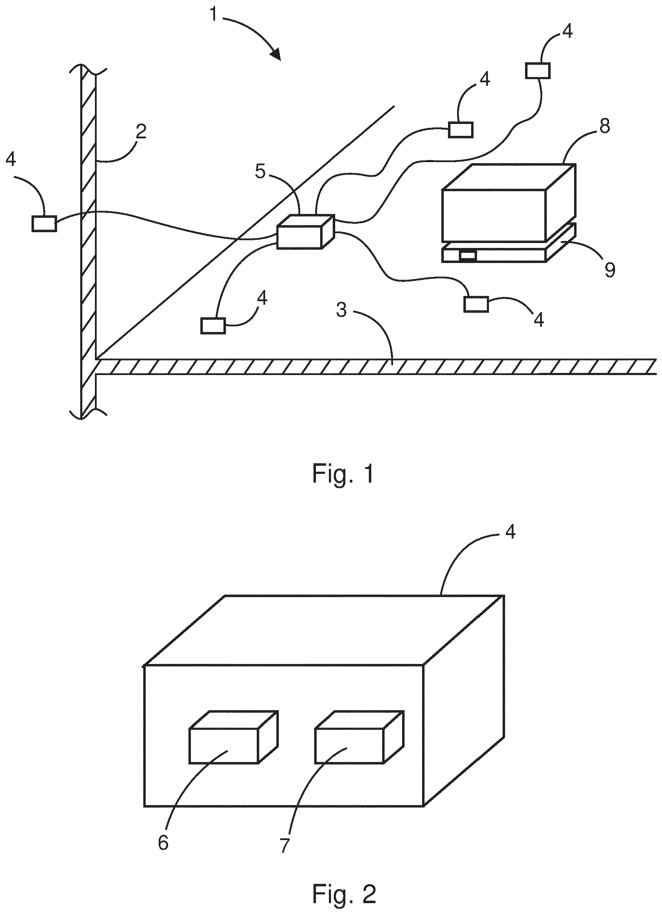

Fig. 1 shows a schematic representation of a system 1 that may carry out the inventive method in accordance with one embodiment. The system 1 comprises at plurality of devices 4 and is configured for actively dampening vibrations in a structure 2, the structure 2 having a floor 3 with the devices 4 spread on it on different locations of the floor 3.

As shown in Fig. 2, each device 4 includes at least a vibration transducer 6 for detecting vibrations of the floor 3 and at least a vibration generator 7 for compensating for the detected vibrations by repeatedly introducing corresponding counterforces into the floor 3. In the shown embodiment, the at least one vibration generator 7 and the vibration transducer 6 are both installed in a common housing of each device 4.

As seen in Fig. 1, at least one device 4 may be arranged outside the structure 2 and is set up to detect the vibrations in the soil around the structure 2, like a building. All the devices 4 are connected or connectable e.g., by a communication channel like a wire or wireless to at least a control unit 5 which is arranged to run the inventive method. Therefore, on the control unit 5, an inventive computer program may be executed to carry out the inventive method. Therefore, the control unit 5 may include at least a processor and a memory to run the computer program.

Thereby, the devices 4 are distributed in discrete positions over the floor 3 with distance to each other. They form together with the control unit 5 a grid of sensors (vibration transducers 6) and actuators (vibration generators 7). In an embodiment of the present invention, they may be arranged near a machine 8, especially a vibration sensitive machine like a machine for production of semiconductor chips. As depicted by the dashed lines, at least one device 4 may be arranged on, inside or underground the floor 3 or in or on a base plate 9 of the floor 3. Normally, the base plate 9 is the funding of the machine 8 or for a machine platform. The at least one device 4 could also be arranged between the base plate 9 and the machine platform. Alternatively, the at least one device 4 could be arranged inside or on the machine platform.

As shown in Fig. 1, the control unit 5 may be also connected or connectable to the machine 8. Thereby, the control unit 5 may receive data from the machine controller of the machine 8 about the machine setpoints and may use this data as input to optimize the device setpoints of the machine 8. When the control unit 5 senses vibration disturbances through the devices 4, it can alarm the machine 8 through this connection. Such, e.g. vibrations which characterize an incoming earthquake wave can be picked up by the devices 4 and the machine 8 may be alarmed by the communication channel between the control unit 5 and the machine controller to put the machine 8 out of order or switch it off, in order to prevent further damage of the machine 8. Thus, a more effective vibration isolation of the machine 8 and an optimized setpoint for the machine 8 may be achieved with the present invention, leading to a higher machine efficiency and output quality.

The control unit 5 itself may be connected or connectable to an external computer network, (depicted by the computer and cloud symbol) for external evaluation. Part of the computer network may be databases which may be accessed thorough other computer devices like mobile phones or tablets.

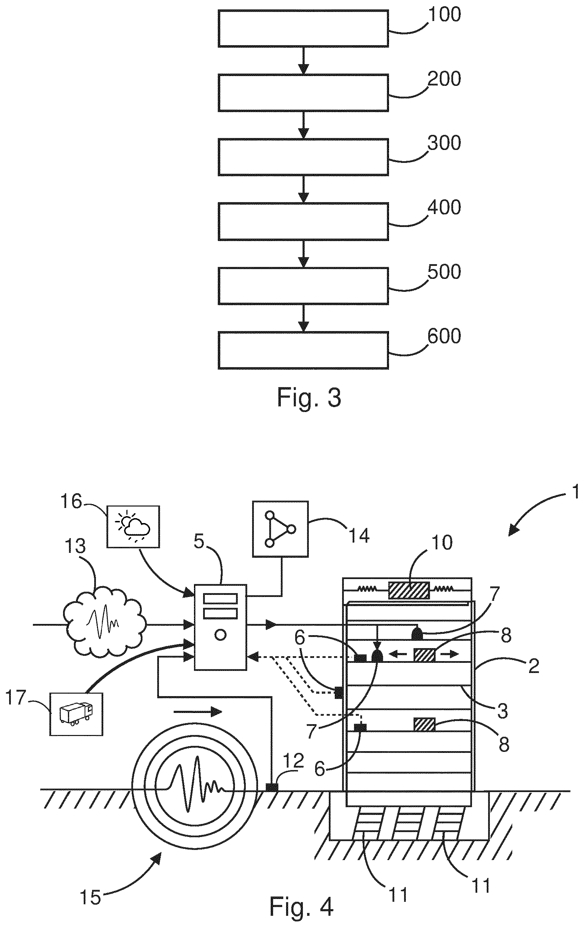

Fig. 3 discloses a flow chart of the inventive computer implemented method. In a first step 100, which corresponds to the inventive step a), the plurality of devices 4 is distributed over several discrete positions on the floor 3 such that the devices 4 are capable of capturing data related to the vibrations of the floor 3.

After the devices 4 have being distributed with at least partial, direct or indirect contact to the floor 3, in a further step 200 which corresponds to the step b) of the inventive method. Thereby, force is applied repeatedly to the floor 3 e.g. in a frequency range to induce initial vibrations. Here, this induction is done with the vibration generators 7 of the devices 4, e.g. synchronously with all the devices 4 at a time. The force application results in vibrations of the floor 3 in a special frequency range.

These vibrations are captured with the devices 4, namely with the vibration transducers 6. This is done in step 300, which corresponds to step c) of the present method.

Then, from the captured data, a mass, stiffness, and damping distribution of the floor is generated. This is done in step 400 which corresponds to step d) of the inventive method. The obtained model may then be used for extinguishing further vibrations other than the initial vibrations (e.g. vibrations due to traffic outside the structure 8 or the operation of the machine 8).

Thus, in a subsequent step 500, which corresponds to step e) of the present method, vibrations are being detected in the floor 3. Thereby, the detected vibrations in the floor 3 can be equalized or extinguishing through corresponding counter-vibrations in respect to the detected vibrations over the several discrete positions of the floor 3 in dependence of the virtual mass, stiffness and damping model of the floor 3 by repeatedly applying a respective counterforce to the floor 3 by the devices 4. This is done in a step 600 which corresponds to step e) of the inventive method. This is done by inducing corresponding counter-vibrations in respect to the detected vibrations over the several discrete positions of the floor 3 in dependence of the virtual mass, stiffness and damping model of the floor 3 by repeatedly applying a respective counterforce to the floor 3.

Thereby, a grid or network of discretely distributed sensors is provided with which vibrations of complete sections of a structure or can be monitored and controlled. Further, sensors both outside and inside the factory may be used to detect an earthquake and put the machine in a shutdown mode and at the same time in events despite an earthquake a virtual stiffness of the structure or floor may be increased despite of the inherent earthquake resistant structure having low stiffness.

With the present invention, the distributed sensor network of devices 4 around the floor may determine the floor characteristics and apply corresponding counter-vibrations to equalize them, to enhance the "virtual stiffness" of the structure 2 and protect the machine 8, for instance in an event of an approaching earthquake wave or vibration from in- or outside the structure 2 before it arrives at the floor 3 and causes damage to the operating machine 8 or its products being fabricated.

In Fig. 4 a simplified schematic arrangement of a system 1 arranged at a building structure 2 is shown. One advantage of the current invention can be seen in the possibility to combine existing building earthquake protection systems with a vibration dampening system 1. This can have the advantage that sites or building structures 2 which do not initially provide the properties to support vibration sensitive machinery 8 may be modified to comply with high standards of vibration isolation. One of the challenges is to handle both the requirements for effective earthquake protection as well as an effective vibration dampening allowing for instance deployment of machines 8 capable of producing semiconductors with one-digit nanometer range structures.

Figure 4 shows a building 2 with a pre-installed earthquake protection system. For example, a dampening mass 10 is installed in a roof area of a building 2. Usually such a dampening mass 10 can be horizontally suspended or even combined with an actuator (not shown) to actively generate counterforces. Alternatively, or in addition shock absorbers 11 are installed at a base plate of a building structure 2. Machines 8 are deployed on floors 3 of that structure 2. For the detection of vibrations on the building floors 3, vibration transducers 6 are deployed at one or more floors 3. Optionally or in addition, such transducers 6 can be deployed outside the structure 2. The transducers 6 can be combined with vibration generators 7 in a device 4.

The vibration transducers 6 are configured to capture data related to vibrations, in particular amplitude, frequency and alike. In addition, earthquake sensors 12 are deployed in a distance around the building structure 8. These earthquake sensors 12 are configured to detect typical earthquake soil movements or vibrations. This sensor data is provided to the control unit 5. Optionally or additionally, an external earthquake prevention system 13 is be connected to the control unit 5. If such earthquake pre-warning system detects an approaching earthquake wave 15, a signal is provided to the control unit 5 to, for example, switch off any systems limiting and earthquake protection system of a building structure 8. For example, the system 14 generating the virtual stiffness of the building structure 8 may be switched off to allow an effective protection of the building in the event of an earthquake. In this case, machines 8 may be switched to a protected mode to avoid damages.

The control unit 5 can, for example, be configured to switch between an earthquake mode and a virtual stiffness mode for the structure 8. The control unit 5 comprises or is connected to the data model 14 which describes the vibration related properties of one or more floors of a structure 8. The data model 14 can, for example, be based on methods like wavelets, artificial neural networks, Bayesian networks, or finite state time models.

Combining external sensor data with a vibration suppression system can enhance its performance and enable it to respond more effectively to varying conditions. Weather conditions can impact the behavior of structures and vibrations. According to an example, it is suggested to incorporate weather data such as temperature, humidity, wind speed, and precipitation. This data can be retrieved, for example, from a weather database 16. According to an example, the parameters of the vibration suppression system 1 are adjusted to compensate for environmental effects. For example, during high winds, the system 1 is configured to increase a degree of damping or stiffness to counteract the wind-induced vibrations.

The earthquake early warning system 13, as shown in Fig. 4, can detect the initiation of an earthquake and provide advance notice. According to an example, by receiving this data, pre-defined vibration control strategies can be activated to mitigate the effects of the seismic event, such as activating active control devices 10, 11 and/or adjusting damping levels of the vibration generators 7. If the vibration suppression system is installed in a location affected by traffic vibrations or varying loads, integrating data from traffic monitoring systems 17 as shown in Fig. 4 and/or load sensors are provided to the control unit 5 to adjust parameters of system 1 accordingly. For example, considering the real-time traffic patterns or load conditions of a road infrastructure, the control strategies can be optimized to account for changing dynamic loads and improve vibration suppression.

According to another example, data from noise sensors, air quality monitors, or ground movement sensors are provided to the control unit 5. This data can help identifying additional factors contributing to vibrations, enabling more comprehensive control strategies. According to an example, the control unit 5 is adapted to provide signal processing of external data such as traffic data from traffic monitoring systems 17 and/or earthquake warning systems 13 and/or other external data such as air quality or noise to ensure sufficient signal quality.

According to an example, the control unit 5 is configured to create a virtual mass model, stiffness model or damping model based on traffic monitoring data, weather data, and/or noise data. According to another example, creating the virtual mass model, stiffness model or damping model comprises a step of analyzing the external and system generated data using data mining methods. According to an example, the analysis comprises a step of preprocessing and/or classifying the external data prior to creating the data models. This may improve an accuracy and/or detail level of the data model. When combining external sensor data with a vibration suppression system, it is essential to ensure data accuracy, synchronization, and appropriate signal processing techniques.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

### Reference signs

- 1: system
- 2: structure
- 3: floor
- 4: device
- 5: control unit
- 6: vibration transducer
- 7: vibration generator
- 8: machine
- 9: base plate
- 10: dampening mass
- 11: shock absorbers
- 12: earthquake sensor
- 13: earthquake pre-warning system
- 14: data model
- 15: earthquake wave
- 16: weather database
- 17: traffic monitoring system

## Claims

1. Computer implemented method for active dampening of vibrations in a structure (2) having a floor (3), comprising the following steps:
a) distributing a plurality of devices (4) over several discrete positions on the floor (3), the devices (4) being capable of capturing data related to the vibrations of the floor (3);
b) inducing initial vibrations by repeatedly applying a force to the floor (3);
c) capturing data related to the mass, stiffness, or damping distribution of the floor (3) from the captured data related to the initial vibrations of the floor (3) with each device (4);
d) creating a virtual mass, stiffness or damping model of the floor (3) from the captured data of the devices (4);
e) detecting vibrations in the floor (3) with the devices (4) over the respective several discrete positions;
f) inducing corresponding counter-vibrations in respect to the detected vibrations over the several discrete positions of the floor (3) in dependence of the virtual mass, stiffness, and damping model of the floor (3) by repeatedly applying a respective counterforce to the floor (3), **characterized in that**
g) at least the steps b), c), e) - and particularly step f) - are carried out by one and the same devices (4) on the same positions, the devices (4) therefore comprising a vibration transducer (6) for detecting vibrations of the floor (3) and at least one vibration generator (7) for compensating for the detected vibrations by introducing corresponding counter-vibrations into the floor (3).

2. Method according to claim 1, **characterized in that** the plurality of devices (4) is placed near known vibration sources such as machines (8), pumps or air conditioning units being in direct or indirect contact with the floor (3).

3. Method according to any of the claims 1 or 2, **characterized in that** in a step d1) between steps d) and e) of claim 1, at least one portion of the data of the created model is optimized, especially to reduce the counterforce introduced with the devices (4) over the several discrete positions to a predetermined amount or a minimum.

4. Method according to any of the claims 1 to 3, **characterized in that** the induced corresponding counter-vibrations are chosen such that a predetermined compliance of the structure (2) is set to a predetermined frequency or frequency range, wherein the frequency is higher than 0.01 Hz.

5. Method according to any of the claims 1 to 4, **characterized in that** the time of flight of a vibration is measured by the plurality of devices (4) to estimate a not known source of vibrations.

6. Method according to claim 5, **characterized in that** the time of flight is captured by determining the location of each of the devices (4) on the floor (3) and calculating the phase shift of each vibration detected with the device (4).

7. System (1) for actively dampening vibrations in a structure (2) having a floor (3), comprising a plurality of devices (4), each device (4) including a vibration transducer (6) for detecting vibrations of the floor (3) and a vibration generator (7) for compensating for the detected vibrations by repeatedly introducing a corresponding counterforce into the floor (3), and at least a control unit (5) which is connected or connectable to the plurality of devices (4) and being arranged to carry out a method according to one of the preceding claims.

8. System (1) according to claim 7, **characterized in that** the at least one vibration transducer (6) and the at least one vibration generator (7) of the at least one device (4) are installed in a common housing.

9. System (1) according to claim 7 or 8, **characterized in that** the at least one vibration transducer (6) and the at least one vibration generator (7) of the at least one device (4) are arranged on a base plate of the floor (3) for placing a machine (8) onto it or on a machine platform standing on the base plate or arranged between the base plate and the machine platform.

10. System (1) according to claim 7 or 8, **characterized in that** the at least one vibration transducer (6) and the at least one vibration generator (7) of the at least one device (4) are arranged in a base plate of the floor (3) for placing a machine (8) onto it or in a machine platform standing on the base plate.

11. System (1) according to any one of claims 7 to 10, **characterized in that** the at least one device (4), especially the vibration transducer (6) and the vibration generator (7) of the at least one device (4), are arranged inside or underground the floor (3).

12. System (1) according to any one of claims 7 to 11, **characterized in that** at least one of the vibration transducers (6) is arranged outside the structure (2) and is arranged to detect the vibrations in the soil around the structure (2).

13. System (1) according to any one of claims 7 to 12, **characterized in that** control unit (5) comprises a memory to log historic vibrations captured by the plurality of devices (4).

14. Computer program comprising instructions to cause the system (1) of any of the claims 7 to 13 to execute the steps of the method of any of the claims 1 to 6.

## Patentansprüche

1. Computerimplementiertes Verfahren zur aktiven Dämpfung von Vibrationen in einer Struktur (2) mit einem Boden (3), umfassend die folgenden Schritte:
a) Verteilen einer Vielzahl von Vorrichtungen (4) über mehrere diskrete Positionen auf dem Boden (3), wobei die Vorrichtungen (4) in der Lage sind, Daten in Bezug auf die Vibrationen des Bodens (3) zu erfassen;
b) Induzieren anfänglicher Vibrationen durch wiederholtes Aufbringen einer Kraft auf den Boden (3);
c) Erfassen von Daten in Bezug auf die Massen-, Steifigkeits- oder Dämpfungsverteilung des Bodens (3) aus den erfassten Daten in Bezug auf die anfänglichen Vibrationen des Bodens (3) mit jeder Vorrichtung (4);
d) Erstellen eines virtuellen Massen-, Steifigkeits- oder Dämpfungsmodells des Bodens (3) aus den erfassten Daten der Vorrichtungen (4);
e) Detektieren von Vibrationen im Boden (3) mit den Vorrichtungen (4) über die jeweiligen mehreren diskreten Positionen;
f) Induzieren entsprechender Gegenvibrationen in Bezug auf die detektierten Vibrationen über die mehreren diskreten Positionen des Bodens (3) in Abhängigkeit von dem virtuellen Massen-, Steifigkeits- und Dämpfungsmodell des Bodens (3) durch wiederholtes Aufbringen einer jeweiligen Gegenkraft auf den Boden (3), **dadurch gekennzeichnet, dass**
g) zumindest die Schritte b), c), e) - und insbesondere Schritt f) - durch ein und dieselben Vorrichtungen (4) an denselben Positionen ausgeführt werden, wobei die Vorrichtungen (4) daher einen Vibrationstransducer (6) zum Detektieren von Vibrationen des Bodens (3) und zumindest einen Vibrationsgenerator (7) zum Kompensieren der detektierten Vibrationen durch Einbringen entsprechender Gegenvibrationen in den Boden (3) umfassen.

2. Verfahren nach Anspruch 1, **dadurch gekennzeichnet, dass** die Vielzahl von Vorrichtungen (4) nahe bekannten Vibrationsquellen wie Maschinen (8), Pumpen oder Klimaanlagen angeordnet ist, die sich in direktem oder indirektem Kontakt mit dem Boden (3) befinden.

3. Verfahren nach einem der Ansprüche 1 oder 2, **dadurch gekennzeichnet, dass** in einem Schritt d1) zwischen den Schritten d) und e) von Anspruch 1 zumindest ein Teil der Daten des erstellten Modells optimiert wird, insbesondere um die mit den Vorrichtungen (4) über die mehreren diskreten Positionen eingebrachte Gegenkraft auf einen vorbestimmten Betrag oder ein Minimum zu reduzieren.

4. Verfahren nach einem der Ansprüche 1 bis 3, **dadurch gekennzeichnet, dass** die induzierten entsprechenden Gegenvibrationen so gewählt werden, dass eine vorbestimmte Nachgiebigkeit der Struktur (2) auf eine vorbestimmte Frequenz oder einen Frequenzbereich eingestellt wird, wobei die Frequenz größer als 0,01 Hz ist.

5. Verfahren nach einem der Ansprüche 1 bis 4, **dadurch gekennzeichnet, dass** die Laufzeit einer Vibration durch die Vielzahl von Vorrichtungen (4) gemessen wird, um eine unbekannte Quelle von Vibrationen abzuschätzen.

6. Verfahren nach Anspruch 5, **dadurch gekennzeichnet, dass** die Laufzeit erfasst wird durch Bestimmen der Position jeder der Vorrichtungen (4) auf dem Boden (3) und Berechnen der Phasenverschiebung jeder mit der Vorrichtung (4) detektierten Vibration.

7. System (1) zur aktiven Dämpfung von Vibrationen in einer Struktur (2) mit einem Boden (3), umfassend eine Vielzahl von Vorrichtungen (4), wobei jede Vorrichtung (4) einen Vibrationstransducer (6) zum Detektieren von Vibrationen des Bodens (3) und einen Vibrationsgenerator (7) zum Kompensieren der detektierten Vibrationen durch wiederholtes Einbringen einer entsprechenden Gegenkraft in den Boden (3) umfasst, und zumindest eine Steuereinheit (5), die mit der Vielzahl von Vorrichtungen (4) verbunden ist oder verbindbar ist und dazu eingerichtet ist, ein Verfahren nach einem der vorhergehenden Ansprüche auszuführen.

8. System (1) nach Anspruch 7, **dadurch gekennzeichnet, dass** der zumindest eine Vibrationstransducer (6) und der zumindest eine Vibrationsgenerator (7) der zumindest einen Vorrichtung (4) in einem gemeinsamen Gehäuse installiert sind.

9. System (1) nach Anspruch 7 oder 8, **dadurch gekennzeichnet, dass** der zumindest eine Vibrationstransducer (6) und der zumindest eine Vibrationsgenerator (7) der zumindest einen Vorrichtung (4) auf einer Grundplatte des Bodens (3) zum Aufstellen einer Maschine (8) darauf oder auf einer auf der Grundplatte stehenden Maschinenplattform oder zwischen der Grundplatte und der Maschinenplattform angeordnet sind.

10. System (1) nach Anspruch 7 oder 8, **dadurch gekennzeichnet, dass** der zumindest eine Vibrationstransducer (6) und der zumindest eine Vibrationsgenerator (7) der zumindest einen Vorrichtung (4) in einer Grundplatte des Bodens (3) zum Aufstellen einer Maschine (8) darauf oder in einer auf der Grundplatte stehenden Maschinenplattform angeordnet sind.

11. System (1) nach einem der Ansprüche 7 bis 10, **dadurch gekennzeichnet, dass** die zumindest eine Vorrichtung (4), insbesondere der Vibrationstransducer (6) und der Vibrationsgenerator (7) der zumindest einen Vorrichtung (4), innerhalb oder unterirdisch des Bodens (3) angeordnet sind.

12. System (1) nach einem der Ansprüche 7 bis 11, **dadurch gekennzeichnet, dass** zumindest einer der Vibrationstransducer (6) außerhalb der Struktur (2) angeordnet ist und dazu eingerichtet ist, die Vibrationen im Boden um die Struktur (2) zu detektieren.

13. System (1) nach einem der Ansprüche 7 bis 12, **dadurch gekennzeichnet, dass** die Steuereinheit (5) einen Speicher umfasst, um historische Vibrationen zu protokollieren, die von der Vielzahl von Vorrichtungen (4) erfasst wurden.

14. Computerprogramm umfassend Anweisungen, um das System (1) nach einem der Ansprüche 7 bis 13 zu veranlassen, die Schritte des Verfahrens nach einem der Ansprüche 1 bis 6 auszuführen.

## Revendications

1. Procédé mis en œuvre par ordinateur pour l'amortissement actif de vibrations dans une structure (2) comportant un sol (3), comprenant les étapes suivantes:
a) distribution d'une pluralité de dispositifs (4) sur plusieurs positions discrètes sur le sol (3), les dispositifs (4) étant capables de capter des données relatives aux vibrations du sol (3);
b) induction de vibrations initiales en appliquant de manière répétée une force au sol (3);
c) capture de données relatives à la répartition de la masse, de la rigidité ou de l'amortissement du sol (3) à partir des données captées relatives aux vibrations initiales du sol (3) avec chaque dispositif (4);
d) création d'un modèle virtuel de masse, de rigidité ou d'amortissement du sol (3) à partir des données captées des dispositifs (4);
e) détection des vibrations dans le sol (3) avec les dispositifs (4) sur les plusieurs positions discrètes respectives;
f) induction de contre-vibrations correspondantes par rapport aux vibrations détectées sur les plusieurs positions discrètes du sol (3) en fonction du modèle virtuel de masse, de rigidité et d'amortissement du sol (3) en appliquant de manière répétée une contre-force respective au sol (3), **caractérisé en ce que**
g) au moins les étapes b), c), e) - et en particulier l'étape f) - sont réalisées par un seul et même dispositif (4) aux mêmes positions, les dispositifs (4) comprenant donc un transducteur de vibrations (6) pour détecter les vibrations du sol (3) et au moins un générateur de vibrations (7) pour compenser les vibrations détectées en introduisant des contre-vibrations correspondantes dans le sol (3).

2. Procédé selon la revendication 1, **caractérisé en ce que** la pluralité de dispositifs (4) est placée à proximité de sources de vibrations connues, telles que des machines (8), des pompes ou des unités de climatisation étant en contact direct ou indirect avec le sol (3).

3. Procédé selon l'une quelconque des revendications 1 ou 2, **caractérisé en ce que**, lors d'une étape d1) entre les étapes d) et e) de la revendication 1, au moins une partie des données du modèle créé est optimisée, notamment pour réduire la contre-force introduite avec les dispositifs (4) sur les plusieurs positions discrètes à une valeur prédéterminée ou à un minimum.

4. Procédé selon l'une quelconque des revendications 1 à 3, **caractérisé en ce que** les contre-vibrations correspondantes induites sont choisies de manière à ce qu'une compliance prédéterminée de la structure (2) soit réglée à une fréquence ou une plage de fréquences prédéterminée, la fréquence étant supérieure à 0,01 Hz.

5. Procédé selon l'une quelconque des revendications 1 à 4, **caractérisé en ce que** le temps de propagation d'une vibration est mesuré par la pluralité de dispositifs (4) afin d'estimer une source de vibrations inconnue.

6. Procédé selon la revendication 5, **caractérisé en ce que** le temps de propagation est capté en déterminant la position de chacun des dispositifs (4) sur le sol (3) et en calculant le décalage de phase de chaque vibration détectée avec le dispositif (4).

7. Système (1) pour l'amortissement actif de vibrations dans une structure (2) comportant un sol (3), comprenant une pluralité de dispositifs (4), chaque dispositif (4) incluant un transducteur de vibrations (6) pour détecter les vibrations du sol (3) et un générateur de vibrations (7) pour compenser les vibrations détectées en introduisant de manière répétée une contre-force correspondante dans le sol (3), et au moins une unité de commande (5) qui est reliée ou peut être reliée à la pluralité de dispositifs (4) et qui est agencée pour réaliser un procédé selon l'une quelconque des revendications précédentes.

8. Système (1) selon la revendication 7, **caractérisé en ce que** ledit au moins un transducteur de vibrations (6) et ledit au moins un générateur de vibrations (7) du dispositif (4) sont installés dans un boîtier commun.

9. Système (1) selon la revendication 7 ou 8, **caractérisé en ce que** ledit au moins un transducteur de vibrations (6) et ledit au moins un générateur de vibrations (7) du dispositif (4) sont disposés sur une plaque de base du sol (3) pour y placer une machine (8) ou sur une plateforme de machine reposant sur la plaque de base ou disposés entre la plaque de base et la plateforme de machine.

10. Système (1) selon la revendication 7 ou 8, **caractérisé en ce que** ledit au moins un transducteur de vibrations (6) et ledit au moins un générateur de vibrations (7) du dispositif (4) sont disposés dans une plaque de base du sol (3) pour y placer une machine (8) ou dans une plateforme de machine reposant sur la plaque de base.

11. Système (1) selon l'une quelconque des revendications 7 à 10, **caractérisé en ce que** ledit au moins un dispositif (4), en particulier le transducteur de vibrations (6) et le générateur de vibrations (7), est disposé à l'intérieur ou sous le sol (3).

12. Système (1) selon l'une quelconque des revendications 7 à 11, **caractérisé en ce qu'**au moins un des transducteurs de vibrations (6) est disposé à l'extérieur de la structure (2) et est agencé pour détecter les vibrations dans le sol autour de la structure (2).

13. Système (1) selon l'une quelconque des revendications 7 à 12, **caractérisé en ce que** l'unité de commande (5) comprend une mémoire pour enregistrer des vibrations historiques captées par la pluralité de dispositifs (4).

14. Programme informatique comprenant des instructions pour amener le système (1) selon l'une quelconque des revendications 7 à 13 à exécuter les étapes du procédé selon l'une quelconque des revendications 1 à 6.
